# EUROPEAN PATENT APPLICATION

(11) **EP 4 520 789 A1**
(43) Date of publication of application: **12.03.2025**
(21) Application number: 24757088.0
(22) Date of filing: 01.02.2024
(51) Int. Cl.: C08L 63/00, C08L 51/04, C08L 75/04, C08G 59/26, C09J 167/00, C09J 11/08

(54) **CURABLE RESIN COMPOSITION AND ADHESIVE COMPOSITION**

(30) Priority: 13.02.2023 KR 20230018787; 15.01.2024 KR 20240006087
(71) Applicant: LG Chem, Ltd., Yeongdeungpo-gu Seoul 07336 (KR)
(72) Inventor: NAM, Sang Il, Daejeon 34122 (KR); LEE, Kwang Jin, Daejeon 34122 (KR); YOO, Ki Hyun, Daejeon 34122 (KR); SHIM, Sun Woo, Seoul 08588 (KR); KIM, Young Su, Seoul 08588 (KR)
(74) Representative: Plasseraud IP
(86) International application number: PCT/KR2024/001573
(87) International publication number: WO 2024/172358

(57) **Abstract**

The present invention relates to a curable resin composition, which reduces environmental pollution by using an eco-friendly bio-based epoxy resin instead of the conventional petroleum-based epoxy resin, satisfies all the mechanical strength characteristics required by a curable resin composition containing the conventional petroleum-based epoxy resin, and has excellent productivity and excellent mechanical properties by dispersing a graft copolymer in a curable resin through a powder phase dispersion method, and an adhesive composition comprising the same.

## Description

### TECHNICAL FIELD

### [Cross-reference to Related Applications]

This application claims the benefit of Korean Patent Application No. 10-2023-0018787, filed on February 13, 2023, in the Korean Intellectual Property Office, the contents of which are incorporated herein by reference.

### [Technical Field]

The present invention relates to a curable resin composition and an adhesive composition comprising the same as a toughening agent.

### BACKGROUND ART

Curable resins, represented by epoxy resins, are used in various fields such as electrical and electronic products, automobile parts, and building materials. Recently, as interest in eco-friendly bio materials has increased, efforts are being made to apply eco-friendly bio materials to an epoxy resin. If the conventional petroleum-based epoxy resins are replaced with eco-friendly bio-based epoxy resins, environmental pollution that occurs during the production of petroleum-based raw materials may be reduced.

Meanwhile, curable resins such as epoxy resins are used in combination with additives such as inorganic fillers, releasing agents, and rubber fine particles with rubber-like properties, for the purpose of improving physical properties and processability, rather than being used alone. Among them, epoxy resins often exhibit brittle properties and require improvement in impact resistance and adhesive strength. This requirement applies not only to the conventional petroleum-based epoxy resins but also eco-friendly bio-based epoxy resins.

As a method for improving the impact resistance of epoxy resins, a method of using a graft copolymer containing a rubbery polymer as an impact reinforcing agent has been suggested. The graft copolymer has a particle form of a core-shell structure including a core containing a rubbery polymer and a shell formed by graft-polymerization to the core.

Here, in order to apply the graft copolymer as an impact reinforcing agent for an epoxy resin, the graft copolymer is required to be dispersed in the epoxy resin, and as methods for dispersing the graft copolymer in the epoxy resin, there are a liquid dispersion method and a powder phase dispersion method.

According to the liquid dispersion method, a graft copolymer is dispersed in an epoxy resin by a step-by-step solvent substitution method in which water is replaced with a solvent for a latex-state graft copolymer in which a graft copolymer is dispersed in water, and the solvent is then replaced with an epoxy resin. The liquid dispersion method has the advantage of dispersing the graft copolymer in a homogeneous distribution matrix of the epoxy resin, but in order to apply the graft copolymer to the epoxy resin as an impact reinforcing agent, there are storage problems in that the graft copolymer is required to be kept in a latex state until dispersed, the process cost is high due to the solvent replacement, and there are environmental issues due to the water and solvent, discharged separately from the replacement process of the graft copolymer and solvent.

The powder phase dispersion method has the advantages of low process costs in that dry powder agglomerated from the graft copolymer latex, that is, the graft copolymer in a powder phase is directly dispersed in the epoxy resin. However, the viscosity of the graft copolymer powder becomes very high when introducing the graft copolymer powder in the epoxy resin, and the dispersion becomes very difficult or impossible in practice.

Therefore, efforts are simultaneously required to use eco-friendly bio-based epoxy resins instead of the conventional petroleum-based epoxy resins while satisfying all the mechanical strength characteristics required by curable resin compositions containing the conventional petroleum-based epoxy resins, and to apply a powder phase dispersion method to improve both the process costs and environmental aspects in terms of applying an impact reinforcing agent to a curable resin composition such as an epoxy resin.

### [Prior Art Document]

### [Patent Document]

(Patent Document 1) JP 2006-104328 A

### DETAILED DESCRIPTION OF THE INVENTION

### TECHNICAL PROBLEM

The task to be solved by the present invention is to reduce environmental pollution by applying an eco-friendly bio-based epoxy resin instead of the conventional petroleum-based epoxy resin, while satisfying all the mechanical strength characteristics required by a curable resin composition containing the conventional petroleum-based epoxy resin.

In addition, the task to be solved in the present invention is to apply a powder phase dispersion method to improve both the process costs and environmental aspects in applying an impact reinforcing agent to a curable resin composition containing an eco-friendly bio-based epoxy resin.

That is, in order to solve the tasks mentioned in the background art of the invention, the object of the present invention is to provide a curable resin composition which uses an eco-friendly bio-based epoxy resin instead of the conventional petroleum-based epoxy resin, satisfies all the mechanical strength characteristics required by a curable resin composition containing the conventional petroleum-based epoxy resin, and has excellent productivity and excellent mechanical properties through dispersing a graft copolymer in the curable resin by a powder phase dispersion method.

In addition, the object of the present invention is to provide a structural adhesive composition having excellent mechanical strength while containing an eco-friendly bio-based epoxy resin as a main material, by applying the curable resin composition as a toughening agent.

### TECHNICAL SOLUTION

To solve the above tasks, the present invention provides a curable resin composition and an adhesive composition.
(1) The present invention provides a curable resin composition comprising a continuous phase containing a curable resin and a dispersion phase containing a graft copolymer, wherein the curable resin comprises 58 wt% to 82 wt% of a bio curable resin, and 18 wt% to 42 wt% of an epoxy resin, the graft copolymer is a core-shell type graft copolymer comprising a core containing a rubbery polymer and a shell formed by graft polymerizing a graft monomer to the rubbery polymer, and the graft copolymer comprises 70 wt% to 92 wt% of the rubbery polymer.
(2) The present invention provides the curable resin composition according to (1), wherein the bio curable resin is a bio epoxy resin.
(3) The present invention provides the curable resin composition according to (1) or (2), wherein the bio curable resin comprises an isosorbide unit.
(4) The present invention provides the curable resin composition according to any one of (1) to (3), wherein the bio curable resin is represented by Formula 1 below. 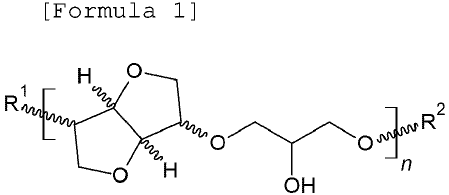 In Formula 1, R¹ and R² are each independently hydrogen, a hydroxyl group, an epoxy group, or a glycidyl group, and n is an integer selected from 1 to 1,000.
(5) The present invention provides the curable resin composition according to any one of (1) to (4), wherein the bio curable resin has an epoxy equivalent (E.E.W) of 150 g/eq to 190 g/eq.
(6) The present invention provides the curable resin composition according to any one of (1) to (5), wherein the bio curable resin has a 25°C viscosity of 500 cPs to 6,000 cPs.
(7) The present invention provides the curable resin composition according to any one of (1) to (6), wherein the epoxy resin comprises one or more selected from the group consisting of a bisphenol A-type epoxy resin, a bisphenol F-type epoxy resin, a bisphenol AD-type epoxy resin, a bisphenol E-type epoxy resin, a naphthalene-type epoxy resin, a biphenyl-type epoxy resin, a dicyclopentadiene-type epoxy resin, a phenol novolac-type epoxy resin, an aliphatic cyclic epoxy resin and a glycidyl amine-type epoxy resin.
(8) The present invention provides the curable resin composition according to any one of (1) to (7), wherein the epoxy resin has an epoxy equivalent (E.E.W) of 180 g/eq to 190 g/eq.
(9) The present invention provides the curable resin composition according to any one of (1) to (8), wherein the epoxy resin has a 25°C viscosity of 8,000 cPs to 13,500 cPs.
(10) The present invention provides the curable resin composition according to any one of (1) to (9), wherein a peak area ratio for a bio curable resin and an epoxy resin (bio curable resin: epoxy resin) is 0.60 to 5.60: 1, the peak area ratio being obtained by dissolving 0.2 g of a curable resin composition sample in acetone, adding 40 mL of methanol thereto, filtering a supernatant through a 2 mL vial for liquid chromatography using a polytetrafluoroethylene filter of 0.22 µm, and detecting in accordance with an elution time by an evaporation light scattering detector (ELSD) using high performance liquid chromatography (HPLC).
(11) The present invention provides the curable resin composition according to any one of (1) to (10), wherein the rubbery polymer comprises one or more monomer units selected from the group consisting of a conjugated diene-based monomer unit and an alkyl acrylate-based monomer unit.
(12) The present invention provides the curable resin composition according to any one of (1) to (11), wherein the graft copolymer comprises 70 wt% to 92 wt% of the core and 8 wt% to 30 wt% of the shell.
(13) The present invention provides the curable resin composition according to any one of (1) to (12), wherein the core has an average particle diameter of 100 nm to 500 nm.
(14) The present invention provides the curable resin composition according to any one of (1) to (13), wherein the graft monomer comprises an alkyl (meth)acrylate-based monomer.
(15) The present invention provides the curable resin composition according to any one of (1) to (14), wherein the graft monomer comprises a methyl (meth)acrylate monomer and an alkyl (meth)acrylate-based monomer of 2 to 12 carbon atoms.
(16) The present invention provides the curable resin composition according to any one of (1) to (15), wherein the graft monomer comprises an aromatic vinyl-based monomer.
(17) The present invention provides the curable resin composition according to any one of (1) to (16), wherein the shell has a weight average molecular weight of 10,000 g/mol to 85,000 g/mol.
(18) The present invention provides the curable resin composition according to any one of (1) to (17), wherein the graft copolymer has an average particle diameter of 100 nm to 600 nm.
(19) The present invention provides the curable resin composition according to any one of (1) to (18), wherein the curable resin composition comprises 50 wt% to 99 wt% of the continuous phase and 1 wt% to 50 wt% of the dispersion phase.
(20) The present invention provides an adhesive composition comprising the curable resin composition according to any one of (1) to (19).
(21) The present invention provides the adhesive composition according to (20), wherein the adhesive composition comprises a main material, a toughening agent, a urethane resin and a curing agent, and the toughening agent is the curable resin composition.
(22) The present invention provides the adhesive composition according to (21), wherein the main material comprises a bio curable resin.
(23) The present invention provides the adhesive composition according to (22), wherein the main material comprises the bio curable resin in the content of 1 wt% to 40 wt% with respect to the total content of the adhesive composition.
(24) The present invention provides the adhesive composition according to any one of (21) to (23), wherein the adhesive composition comprises the toughening agent in the content of 5 wt% to 32 wt% with respect to the total content of the adhesive composition.

### EFFECTS OF THE INVENTION

The curable resin composition of the present invention reduces environmental pollution by using an eco-friendly bio-based epoxy resin instead of the conventional petroleum-based epoxy resin, while satisfying all the mechanical strength characteristics required by a curable resin composition containing the conventional petroleum-based epoxy resin, and resulting in excellent productivity and excellent mechanical properties by dispersing a graft copolymer in a curable resin through a powder phase dispersion method.

In addition, the adhesive composition of the present invention is a structural adhesive composition and has excellent mechanical strength while containing an eco-friendly bio-based epoxy resin as a main material by applying the curable resin composition as a toughening agent.

### MODE FOR CARRYING OUT THE INVENTION

Hereinafter, the present invention will be described in more detail to assist the understanding of the present invention.

It will be understood that words or terms used in the present disclosure and claims shall not be interpreted as the meaning defined in commonly used dictionaries. It will be further understood that the words or terms should be interpreted as having a meaning that is consistent with their meaning in the technical idea of the invention, based on the principle that an inventor may properly define the meaning of the words or terms to best explain the invention.

The term used in the present invention, "monomer unit" may refer to a component, a structure or the substance itself derived from a monomer, particularly, may mean a repeating unit formed in a polymer through the participation of a monomer injected for a polymerization reaction during polymerizing a polymer.

The term used in the present invention, "composition" includes a mixture of materials including the composition as well as a reaction product and decomposition product formed from the materials of the composition.

The present invention provides a curable resin composition.

According to an embodiment of the present invention, the curable resin composition may include a bio curable resin as a curable resin, and a graft copolymer as an impact reinforcing agent, and particularly, the graft copolymer may be dispersed in a powder form in the curable resin.

According to an embodiment of the present invention, the curable resin composition may include a continuous phase containing a curable resin and a dispersion phase containing a graft copolymer, the curable resin may include 58 wt% to 82 wt% of a bio curable resin and 18 wt% to 42 wt% of an epoxy resin, the graft copolymer is a core-shell type graft copolymer including a core containing a rubbery polymer and a shell formed by graft polymerizing a graft monomer to the rubbery polymer, and the graft copolymer may include 70 wt% to 92 wt% of the rubbery polymer.

According to an embodiment of the present invention, the bio curable resin is an eco-friendly bio-based curable resin, and may be a curable resin prepared from a bio-based material.

According to an embodiment of the present invention, the bio curable resin may include a derived unit from one or more bio-based materials selected from the group consisting of plant-derived fatty acid oils, isosorbide, furan derivatives, tannin derivatives, terpene derivatives, rosin derivatives, lignin and lignin derivatives. In a particular embodiment, the derived unit from the plant-derived fatty acid oil may be one or more selected from the group consisting of epoxidized soybean oil units, epoxidized castor oil units, epoxidized linseed oil units, epoxidized canola oil units, and epoxidized karanja oil units. In addition, the derived unit from the furan derivative may be one or more selected from the group consisting of diglycidyl ester units of 2,5-furan dicarboxylic acid and furfuryl glycidyl ether units.

According to an embodiment of the present invention, the bio curable resin may include an isosorbide unit. Isosorbide forming the isosorbide unit is a derivative derived from sorbitol and corresponds to a bio-based material that may be produced at a low price. Particularly, the isosorbide may be obtained through the dehydration of sorbitan. The sorbitan may be obtained through the dehydration of sorbitol, the sorbitol may be obtained through the dehydrogenation of glucose, and the glucose may be obtained through the depolymerization of polysaccharides such as cellulose and starch.

According to an embodiment of the present invention, the bio curable resin may be a bio epoxy resin including an isosorbide unit. In a particular embodiment, the bio curable resin may be a copolymer including an isosorbide unit and an epoxy unit, and may more particularly be represented by Formula 1 below.

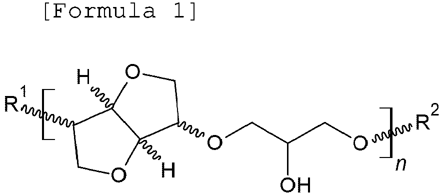

In Formula 1, R¹ and R² may be each independently hydrogen, a hydroxyl group, an epoxy group, or a glycidyl group, and n may be an integer selected from 1 to 1,000. In a particular embodiment, n may be 1 or more, 5 or more, or 10 or more, and 1,000 or less, 900 or less, 800 or less, 700 or less, 600 or less, 500 or less, 400 or less, 300 or less, 200 or less, or 100 or less. In addition, the wavy bond lines are intended to represent the three-dimensional structures of hydrogen, oxygen, R¹ and R², and may correspond to both solid and dotted wedges. In a particular embodiment, the wavy bond lines shown in two hydrogen and oxygen and R² may have the same orientation, that is, all may be solid or dotted wedges, and the wavy bond line shown in R¹ may represent a stereoscopic orientation opposite to that of two hydrogen and oxygen and R².

According to an embodiment of the present invention, the bio curable resin may have an epoxy equivalent (E.E.W) of 150 g/eq to 190 g/eq. In a particular embodiment, the bio curable resin may have an epoxy equivalent of 150 g/eq or more, 155 g/eq or more, 160 g/eq or more, or 165 g/eq or more, and 190 g/eq or less, 185 g/eq or less, 180 g/eq or less, 175 g/eq or less, or 170 g/eq or less, and within this range, effects as a heterogeneous adhesive, particularly as a structural adhesive may be shown.

According to an embodiment of the present invention, the bio curable resin may have a 25°C viscosity of 500 cPs to 6,000 cPs. In a particular embodiment, the bio curable resin may have a 25°C viscosity of 500 cPs or more, 1,000 cPs or more, 1,500 cPs or more, 2,000 cPs or more, 2,500 cPs or more, or 3,000 cPs or more, and 6,000 cPs or less, 5,500 cPs or less, 5,000 cPs or less, 4,500 cPs or less, 4,000 cPs or less, 3,500 cPs or less, 3,000 cPs or less, 2,500 cPs or less, or 2,000 cPs or less, and within this range, workability may be further improved due to low viscosity during mixing a structural adhesive composition.

According to an embodiment of the present invention, the curable resin may further include other types of curable resins which are different from the bio curable resin, in addition to the bio curable resin. Here, the other types of curable resins may be epoxy resins, and may particularly include at least two epoxy bonds, and may more particularly be one or more selected from the group consisting of a bisphenol A-type epoxy resin, a bisphenol F-type epoxy resin, a bisphenol AD-type epoxy resin, a bisphenol E-type epoxy resin, a naphthalene-type epoxy resin, a biphenyl-type epoxy resin, a dicyclopentadiene-type epoxy resin, a phenol novolac-type epoxy resin, an aliphatic cyclic epoxy resin and a glycidyl amine-type epoxy resin.

According to an embodiment of the present invention, the epoxy resin may have an epoxy equivalent (E.E.W) of 180 g/eq to 190 g/eq and may have a 25°C viscosity of 8,000 cPs to 13,500 cPs. Within the ranges, the effects of the structural adhesive may be further improved.

According to an embodiment of the present invention, a peak area ratio for a bio curable resin and an epoxy resin (bio curable resin: epoxy resin) may be 0.60 to 5.60: 1, wherein the peak area ratio is obtained by dissolving 0.2 g of a curable resin composition sample in acetone, adding 40 mL of methanol thereto, filtering a supernatant through a 2 mL vial for liquid chromatography using a polytetrafluoroethylene filter of 0.22 µm, and detecting in accordance with an elution time by an evaporation light scattering detector (ELSD) using high performance liquid chromatography (HPLC). The peak area ratio for a bio curable resin and an epoxy resin (bio curable resin: epoxy resin) detected in accordance with an elution time by an evaporation light scattering detector (ELSD) using high performance liquid chromatography (HPLC) may be determined depending on the ratio of the bio curable resin and the epoxy resin present in the curable resin composition. In a particular embodiment, the curable resin composition may have the peak area ratio for a bio curable resin and an epoxy resin (bio curable resin: epoxy resin) detected in accordance with an elution time by an evaporation light scattering detector (ELSD) using high performance liquid chromatography (HPLC) of 0.60 or more, 0.65 or more, 0.70 or more, 0.75 or more, 0.80 or more, 0.85 or more, 0.90 or more, 0.95 or more, 1.00 or more, or 1.05 or more: 1, and 5.60 or less, 5.50 or less, 5.40 or less, 5.30 or less, 5.20 or less, 5.10 or less, 5.00 or less, 4.90 or less, 4.80 or less, 4.70 or less, 4.60 or less, 4.50 or less, or 4.40 or less. As described above, in a case of mixing the bio curable resin and the epoxy resin as the curable resin an using, if the peak area ratio for the bio curable resin and the epoxy resin (bio curable resin: epoxy resin) detected in accordance with an elution time by an evaporation light scattering detector (ELSD) using high performance liquid chromatography (HPLC) is controlled as above, environmental pollution may be reduced by using an eco-friendly bio-based epoxy resin instead of the conventional petroleum-based epoxy resin, all the mechanical strength characteristics required by the curable resin composition containing the conventional petroleum-based epoxy resin may be satisfied, and at the same time, the viscosity may be easily adjusted to further improve the dispersion efficiency of the graft copolymer in the curable resin, thereby further improving productivity and mechanical properties.

According to an embodiment of the present invention, the curable resin may include 58 wt% to 82 wt% of the bio curable resin and 18 wt% to 42 wt% of the epoxy resin. In a particular embodiment, the curable resin may include the bio curable resin in 58 wt% or more, 59 wt% or more, 60 wt% or more, 61 wt% or more, 62 wt% or more, 63 wt% or more, 64 wt% or more, or 65 wt% or more, and 82 wt% or less, 81 wt% or less, or 80 wt% or less, and a residual amount of the epoxy resin. Like this, if the bio curable resin and the epoxy resin are mixed and used as the curable resin, the viscosity may be easily adjusted, and the dispersion efficiency of the graft copolymer in the curable resin may be further improved.

According to an embodiment of the present invention, the graft copolymer may include a core-shell type graft copolymer including a core containing a rubbery polymer and a shell formed by graft copolymerizing a graft monomer to the rubbery polymer.

According to an embodiment of the present invention, in the core-shell type graft copolymer, the core may mean the rubbery polymer component itself forming the core or core layer of the graft copolymer, and the shell may mean a polymer component or copolymer component forming a shell or a shell layer as a shell type which is graft polymerized to the rubbery polymer and surrounding the core. That is, the core including the rubbery polymer may be the rubbery polymer itself, and the shell may mean a graft layer formed by the graft polymerization of a graft monomer to the rubbery polymer. According to an embodiment of the present invention, the rubbery polymer is a component for providing impact resistance in a case of applying a graft copolymer composition as an impact reinforcing agent and may include one or more monomer units selected from the group consisting of a conjugated diene-based monomer unit and an alkyl acrylate-based monomer unit. In a particular embodiment, the rubbery polymer may be a conjugated diene-based rubbery polymer or an acrylic rubbery polymer. In a more particular embodiment, the conjugated diene-based rubbery polymer may be one or more selected from the group consisting of the homopolymer of a conjugated diene-based monomer and the copolymer of an aromatic vinyl-based monomer-conjugated diene-based monomer, and the acrylic rubbery polymer may be the homopolymer of an alkyl acrylate-based monomer.

According to an embodiment of the present invention, the conjugated diene-based monomer of the rubbery polymer may be one or more selected from the group consisting of 1,3-butadiene, 2,3-dimethyl-1,3-butadiene, piperylene, 3-butyl-1,3-octadiene, isoprene and 2-phenyl-1,3-butadiene, particularly, 1,3-butadiene.

According to an embodiment of the present invention, the aromatic vinyl-based monomer of the rubbery polymer may be one or more selected from the group consisting of styrene, α-methylstyrene, 3-methylstyrene, 4-methylstyrene, 4-propylstyrene, 1-vinyl naphthalene, 4-cyclohexylstyrene, 4-(p-methylphenyl)styrene and 1-vinyl-5-hexylnaphthalene, particularly, styrene.

According to an embodiment of the present invention, the alkyl acrylate-based monomer of the rubbery polymer may be an alkyl acrylate-based monomer of 1 to 12 carbon atoms, particularly, one or more selected from the group consisting of methyl acrylate, ethyl acrylate, propyl acrylate and n-butyl acrylate, more particularly, n-butyl acrylate.

According to an embodiment of the present invention, the shell is a component for improving compatibility and mechanical properties in the case of applying a graft copolymer composition as an impact reinforcing agent, and may be, as described above, a graft layer formed by graft polymerizing a graft monomer to the rubbery polymer. In a particular embodiment, the graft monomer graft polymerized to the rubbery polymer for forming the shell may include an alkyl (meth)acrylate-based monomer.

According to an embodiment of the present invention, the alkyl (meth)acrylate-based monomer of the graft monomer may be an alkyl (meth)acrylate-based monomer of 1 to 12 carbon atoms, particularly, one or more selected from the group consisting of methyl methacrylate, ethyl methacrylate, propyl methacrylate, n-butyl methacrylate, methyl acrylate, ethyl acrylate, propyl acrylate and n-butyl acrylate.

According to an embodiment of the present invention, the alkyl (meth)acrylate-based monomer of the graft monomer may be a methyl (meth)acrylate monomer, and an alkyl (meth)acrylate-based monomer of 2 to 12 carbon atoms, and in this case, the weight average molecular weight of the shell may be further reduced, and accordingly, the swelling of the shell may be minimized during dispersing the graft copolymer in the curable resin, and the increase of the viscosity may be prevented. In this case, the alkyl (meth)acrylate-based monomer may include 50 wt% to 99 wt%, 60 wt% to 90 wt%, or 70 wt% to 85 wt% of the methyl (meth)acrylate monomer, and 1 wt% to 50 wt%, 10 wt% to 40 wt%, 15 wt% to 30 wt% of the alkyl (meth)acrylate-based monomer of 2 to 12 carbon atoms.

According to an embodiment of the present invention, the graft monomer may further include a crosslinkable monomer in addition to the alkyl (meth)acrylate-based monomer. That is, the graft monomer may include the methyl (meth)acrylate monomer, the alky (meth)acrylate-based monomer of 2 to 12 carbon atoms and the crosslinkable monomer.

According to an embodiment of the present invention, the crosslinkable monomer is for further improving compatibility and mechanical properties by the shell while improving shell forming capacity by crosslinking simultaneously during forming the shell by the graft monomer, and may be one or more selected from (meth)acryl-based crosslinking monomers such as ethylene glycol di(meth)acrylate, polyethylene glycol di(meth)acrylate, 1,6-hexanediol di(meth)acrylate, allyl (meth)acrylate, trimethylolpropane tri(meth)acrylate and pentaerythritol tetra(meth)acrylate, and vinyl-based crosslinkable monomers such as divinylbenzene, divinylnaphthalene and diallyl phthalate, particularly, polyethylene glycol diacrylate or allyl methacrylate.

According to an embodiment of the present invention, the graft monomer may further include an aromatic vinyl-based monomer. That is, the graft monomer may include the methyl (meth)acrylate monomer, the alkyl (meth)acrylate-based monomer of 2 to 12 carbon atoms and the aromatic vinyl-based monomer.

According to an embodiment of the present invention, the aromatic vinyl-based monomer of the graft monomer may be one or more selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene and 1-vinyl-5-hexylnaphthalene, particularly, styrene.

According to an embodiment of the present invention, if the graft monomer further includes the aromatic vinyl-based monomer, the aromatic vinyl-based monomer may be included in 0.1 wt% to 10.0 wt%, 0.5 wt% to 5.0 wt%, or 0.8 wt% to 2.0 wt% on the basis of the total amount of the graft monomer.

In the curable resin composition according to the present invention, in order to enable dispersion by a powder phase dispersion method, it may be important to control the content of the core in the graft copolymer and the particle size distribution of the core.

According to an embodiment of the present invention, the graft copolymer may include the rubbery polymer in 70 wt% to 92 wt%. In a particular embodiment, the graft copolymer may include the rubbery polymer in 70 wt% or more, 71 wt% or more, 72 wt% or more, 73 wt% or more, 74 wt% or more, or 75 wt% or more, and 92 wt% or less, 91 wt% or less, 90 wt% or less, 89 wt% or less, 88 wt% or less, 87 wt% or less, 86 wt% or less, 85 wt% or less, 84 wt% or less, 83 wt% or less, 82 wt% or less, 81 wt% or less, or 80 wt% or less. Within the range, mechanical properties may be excellent while securing the compatibility of the curable resin and the graft copolymer composition during dispersing the graft copolymer composition in the curable resin.

According to an embodiment of the present invention, the graft copolymer may include the core containing the rubbery polymer in 70 wt% to 92 wt%. In a particular embodiment, the graft copolymer may include the core in 70 wt% or more, 71 wt% or more, 72 wt% or more, 73 wt% or more, 74 wt% or more, or 75 wt% or more, and 92 wt% or less, 91 wt% or less, 90 wt% or less, 89 wt% or less, 88 wt% or less, 87 wt% or less, 86 wt% or less, 85 wt% or less, 84 wt% or less, 83 wt% or less, 82 wt% or less, 81 wt% or less, or 80 wt% or less. Accordingly, the graft copolymer may include the shell in 8 wt% or more, 9 wt% or more, 10 wt% or more, 11 wt% or more, 12 wt% or more, 13 wt% or more, 14 wt% or more, 15 wt% or more, 16 wt% or more, 17 wt% or more, 18 wt% or more, 19 wt% or more, or 20 wt% or more, and 30 wt% or less, 29 wt% or less, 28 wt% or less, 27 wt% or less, 26 wt% or less, or 25 wt% or less. Within the ranges, if the graft copolymer composition is dispersed in the curable resin, an increase in viscosity may be prevented by minimizing the swelling of the shell, while ensuring sufficient compatibility between the curable resin and the graft copolymer composition. The contents of the core and the shell may be derived from the content ratio of the rubbery polymer and the graft monomer added during preparing the graft copolymer.

According to an embodiment of the present invention, the core may have an average particle diameter of 100 nm to 500 nm, particularly, an average particle diameter of 100 nm or more, 150 nm or more, 200 nm or more, 250 nm or more, 260 nm or more, 270 nm or more, 280 nm or more, 290 nm or more, or 300 nm or more, and 500 nm or less, 490 nm or less, 480 nm or less, 470 nm or less, 460 nm or less, 450 nm or less, 440 nm or less, 430 nm or less, 420 nm or less, 410 nm or less, 400 nm or less, 390 nm or less, 380 nm or less, 370 nm or less, 360 nm or less, 350 nm or less, 340 nm or less, 335 nm or less, 330 nm or less, or 325 nm or less. Within the range, agglomeration among small particles may be prevented during dispersing the graft copolymer composition in the curable resin, and a decrease in dispersibility due to an increase in viscosity may be prevented.

As described above, by controlling the content of the core and the particle diameter distribution of the core in multiple graft copolymers with cores having different particle diameters, included in the graft copolymer composition according to the present invention, dispersion by a powder phase dispersion method in the curable resin composition may be possible.

According to an embodiment of the present invention, the weight average molecular weight of the shell may be 10,000 g/mol to 85,000 g/mol. In a particular embodiment, the shell may have a weight average molecular weight of 10,000 g/mol or more, 15,000 g/mol or more, 20,000 g/mol or more, 25,000 g/mol or more, 30,000 g/mol or more, 35,000 g/mol or more, or 40,000 g/mol or more, and 85,000 g/mol or less, 84,000 g/mol or less, 83,000 g/mol or less, 82,000 g/mol or less, 81,000 g/mol or less, 80,000 g/mol or less, 75,000 g/mol or less, 70,000 g/mol or less, 65,000 g/mol or less, 60,000 g/mol or less, 55,000 g/mol or less, 50,000 g/mol or less, 45,000 g/mol or less, or 40,000 g/mol or less. Within the range, during dispersing the graft copolymer in the curable resin, sufficient compatibility between the curable resin and the graft copolymer may be ensured, while minimizing the swelling of the shell to prevent an increase in viscosity. The weight average molecular weight of the shell may be adjusted by controlling the addition amounts of an initiator, an activator and the like during graft polymerizing the graft monomer in the presence of the rubbery polymer.

According to an embodiment of the present invention, the graft copolymer may have an average particle diameter of 100 nm to 600 nm, particularly, an average particle diameter of 100 nm or more, 150 nm or more, 200 nm or more, 250 nm or more, 260 nm or more, 270 nm or more, 280 nm or more, 290 nm or more, 300 nm or more, 305 nm or more, 310 nm or more, 315 nm or more, 320 nm or more, or 325 nm or more, and 600 nm or less, 590 nm or less, 580 nm or less, 570 nm or less, 560 nm or less, 550 nm or less, 540 nm or less, 530 nm or less, 520 nm or less, 510 nm or less, 500 nm or less, 490 nm or less, 480 nm or less, 470 nm or less, 460 nm or less, 450 nm or less, 440 nm or less, 430 nm or less, 420 nm or less, 410 nm or less, 400 nm or less, 390 nm or less, 380 nm or less, 370 nm or less, 360 nm or less, 350 nm or less, 340 nm or less, 335 nm or less, 330 nm or less, or 325 nm or less. Within this range, an increase in viscosity may be prevented during dispersing the graft copolymer in the curable resin.

According to an embodiment of the present invention, the curable resin composition may include 50 wt% to 99 wt% of a continuous phase and 1 wt% to 50 wt% of a dispersion phase. In a particular embodiment, the curable resin composition may include the continuous phase in 50 wt% or more, 51 wt% or more, 52 wt% or more, 53 wt% or more, 54 wt% or more, or 55 wt% or more, and 99 wt% or less, 95 wt% or less, 90 wt% or less, 85 wt% or less, 80 wt% or less, 75 wt% or less, 70 wt% or less, 65 wt% or less, 60 wt% or less, or 55 wt% or less. In addition, accordingly, the curable resin composition may include the dispersion phase in 1 wt% or more, 5 wt% or more, 10 wt% or more, 15 wt% or more, 20 wt% or more, 25 wt% or more, 30 wt% or more, 35 wt% or more, 40 wt% or more, or 45 wt% or more, and 50 wt% or less, 49 wt% or less, 48 wt% or less, 47 wt% or less, 46 wt% or less, or 45 wt% or less.

In addition, the present invention provides a method for preparing a curable resin composition for preparing the curable resin composition.

According to an embodiment of the present invention, the method for preparing a curable resin composition includes: a step of preparing a graft copolymer latex including the graft copolymer (S10); a step of agglomerating the graft copolymer latex prepared in step (S10) and drying to prepare a graft copolymer powder (S20); and a step of mixing a curable resin and the graft copolymer powder prepared in step (S20) to prepare a curable resin composition (S30), wherein step (S30) is performed by dispersing using a stirrer.

According to an embodiment of the present invention, step (S10) may be performed by including: a step of preparing a rubbery polymer latex including a rubbery polymer (S1); and a step of injecting a graft monomer and performing graft polymerization in the presence of the rubbery polymer latex to prepare a graft copolymer latex including a graft copolymer composition containing multiple graft copolymers with a core-shell type (S2).

According to an embodiment of the present invention, in the method for preparing a curable resin composition, the type and content of the monomer for performing each step may be the same as the type and content of the monomer of the curable resin composition described above.

According to an embodiment of the present invention, step (S1) is a step for preparing a rubbery polymer for forming a core or a core layer in the graft copolymer of a core-shell type, and step (S2) is a step for forming a shell or a shell layer as a shell type surrounding the core through graft polymerizing to the rubbery polymer.

According to an embodiment of the present invention, each of step (S1) and step (S2) may be performed by emulsion polymerization and may be performed in the presence of an emulsifier and an initiator, injected during emulsion polymerization as well as an electrolyte, a molecular weight regulator, an activator or the like. In this case, in performing step (S1), the particle diameter distribution of the rubbery polymer particles of the rubbery polymer particles may be adjusted by the content added of the emulsifier.

According to an embodiment of the present invention, the emulsifier may be one or more selected from the group consisting of a fatty acid-based emulsifier and a rosin acid-based emulsifier, and in this case, effects of excellent latex stability may be obtained.

According to an embodiment of the present invention, the addition amount of the emulsifier in step (S1) may be 0.1 parts by weight to 3.4 parts by weight, 1.0 part by weight to 3.3 parts by weight, 1.5 parts by weight to 3.2 parts by weight, 2.0 parts by weight to 3.2 parts by weight or 2.1 parts by weight to 3.1 parts by weight on the basis of 100 parts by weight of a monomer for polymerizing a rubbery polymer.

According to an embodiment of the present invention, the addition amount of the emulsifier in step (S2) may be 0.1 parts by weight to 1.0 part by weight, 0.1 parts by weight to 0.5 parts by weight, or 0.1 parts by weight to 0.3 parts by weight on the basis of total 100 parts by weight of a rubbery polymer and a monomer for polymerizing a graft copolymer, and within this range, effects of excellent latex stability may be obtained.

According to an embodiment of the present invention, step (S1) may be performed using a water-soluble initiator that can be used during emulsion polymerization, and the water-soluble initiator may include potassium persulfate, sodium persulfate, ammonium persulfate, or the like. Step (S2) may be performed by radical polymerization using a peroxide-based, redox or azo-based initiator that can be used during emulsion polymerization, and the redox initiator may be, for example, one or more selected from the group consisting of t-butyl hydroperoxide, diisopropylbenzene hydroperoxide and cumene hydroperoxide. In this case, effects of providing stable polymerization environment may be obtained. If the redox initiator is used, ferrous sulfide, sodium ethylenediaminetetraacetate or sodium formaldehyde sulfoxylate may be further included as a redox catalyst that is an activator.

According to an embodiment of the present invention, step (S2) may be performed by continuously adding a graft monomer. In performing step (S2), if the graft monomer is added in batch prior to initiating a graft polymerization reaction, defects of increasing the weight average molecular weight of the shell may occur.

According to an embodiment of the present invention, the emulsion polymerization in step (S1) and step (S2) may be performed in an aqueous solvent, and the aqueous solvent may be ion exchange water.

According to an embodiment of the present invention, step (S20) is a step for obtaining the graft copolymer prepared in step (S10) as a powder phase, and may be performed by agglomerating the graft copolymer latex prepared in step (S10) and drying.

According to an embodiment of the present invention, the agglomeration in step (S20) may be performed by adding an agglomerator to the graft copolymer latex. In addition, the agglomeration in step (S20) may be performed by acid agglomeration such as an aqueous solution of sulfuric acid and a base agglomeration such as sodium sulfate, and both the acid agglomeration and the base agglomeration may be performed as necessary. In this case, the acid agglomeration and the base agglomeration may be performed at the same time or step by step. If the agglomeration is performed step by step, the acid agglomeration may be performed first, and then the base agglomeration may be performed, or the base agglomeration may be performed first, and then, the acid agglomeration may be performed. In addition, the agglomeration in step (S20) may be performed in the presence of an organic dispersant, as necessary.

According to an embodiment of the present invention, the drying in step (S20) may be performed by a common drying method, and may further include a step of dehydrating the agglomerated graft copolymer latex prior to drying, as necessary.

According to an embodiment of the present invention, step (S30) is a step of mixing the curable resin and the graft copolymer by the above-described powder phase dispersion method in applying the graft copolymer to the curable resin as an impact reinforcing agent, and may be performed by adding the graft copolymer powder to the curable resin and mixing. As described above, the graft copolymer according to the present invention has excellent powder dispersibility and may be directly dispersed as the form of powder in the curable resin. In a particular embodiment, the viscosity at 25°C of the curable resin composition prepared in step (S30) may be 2,000 Pa.s or less, 1,900 Pa.s or less, 1,800 Pa.s or less, 1,700 Pa.s or less, 1,600 Pa.s or less, 1,500 Pa.s or less, 1,450 Pa.s or less, 1,400 Pa.s or less, 1,350 Pa.s or less, or 1,300 Pa.s or less, and 100 Pa.s or more, 200 Pa.s or more, 300 Pa.s or more, 400 Pa.s or more, 500 Pa.s or more, 600 Pa.s or more, 700 Pa.s or more, 800 Pa.s or more, 900 Pa.s or more, 1,000 Pa.s or more, 1,100 Pa.s or more, or 1,200 Pa.s or more, and within this range, the viscosity of the graft copolymer powder is low and dispersibility is excellent.

In addition, the present invention provides an adhesive composition including the curable resin composition. The adhesive composition may be a structural adhesive composition, and may include the curable resin composition as a toughening agent.

According to an embodiment of the present invention, the adhesive composition may include a main material, a urethane resin and a curing agent, that may be used in an adhesive, in addition to the toughening agent, and may further include a curing accelerator and a filler.

According to an embodiment of the present invention, the main material may include a bio curable resin like the curable resin composition. In this case, the type of the bio curable resin may be the same as the bio curable resin of the curable resin composition.

According to an embodiment of the present invention, the main material may include the bio curable resin in the content of 1 wt% to 40 wt% on the basis of the total content of the adhesive composition. In a particular embodiment, the main material may include the bio curable resin in the content of 1 wt% or more, 5 wt% or more, 10 wt% or more, 15 wt% or more, or 20 wt% or more, and 40 wt% or less, 35 wt% or less, or 30 wt% or less on the basis of the total content of the adhesive composition, and within this range, the effects of the structural adhesive may be further improved.

According to an embodiment of the present invention, the adhesive composition may include the toughening agent in the content of 5 wt% to 32 wt% on the basis of the total content of the adhesive composition. In a particular embodiment, the adhesive composition may include the toughening agent in 5 wt% or more, 6 wt% or more, 7 wt% or more, 8 wt% or more, 9 wt% or more, or 10 wt% or more, and 32 wt% or less, 31 wt% or less, 30 wt% or less, 29 wt% or less, 28 wt% or less, 27 wt% or less, 26 wt% or less, 25 wt% or less, 24 wt% or less, 23 wt% or less, 22 wt% or less, 21 wt% or less, 20 wt% or less, 19 wt% or less, 18 wt% or less, 17 wt% or less, 16 wt% or less, or 15 wt% or less on the basis of the total content of the adhesive composition. Within the range, the impact strength of adhesive, especially structural adhesive composition with respect to a heterogeneous adhesive may be further improved.

Hereinafter, the Examples of the present invention will be explained in detail so that a person skilled in the art to which the present invention belongs can easily perform. However, the present invention may be realized in various different types and is not limited to the Examples explained herein.

### Examples and Comparative Examples

### Example 1

### <Preparation of Rubbery Polymer Latex>

To a nitrogen-substituted polymerization reactor (autoclave), based on total 100 parts by weight of 1,3-butadiene, 75 parts by weight of ion exchange water, 60 parts by weight of 1,3-butadiene, 1.4 parts by weight of potassium rosinate, 0.6 parts by weight of potassium oleate, 0.9 parts by weight of potassium carbonate (K₂CO₃), 0.3 parts by weight of t-dodecylmercaptan and 0.3 parts by weight of potassium persulfate (K₂S₂O₃) were added in batch, and polymerization was performed at a reaction temperature of 70°C. Then, at a point where a polymerization conversion ratio was 30% to 40%, 0.7 parts by weight of potassium oleate was added in batch, 20 parts by weight of 1,3-butadiene was added in batch, and polymerization was continuously performed at a reaction temperature of 70°C. Then, after a polymerization conversion ratio reached 60%, 20 parts by weight of 1,3-butadiene was added in batch, the reaction temperature was raised to 80°C, the polymerization reaction was continuously performed, and the reaction was finished at a point where the polymerization conversion ratio reached 95%. The total time consumed for the polymerization was 23 hours, the gel content of the rubbery polymer latex obtained was 76%, and the average particle diameter of the rubbery polymer particles was 300 nm.

In this case, the polymerization conversion ratio was calculated as the ratio of the weight of the solid content of the rubbery polymer obtained to the weight of the solid content of the monomer added.

### <Preparation of Graft Copolymer Latex>

To a nitrogen-substituted closed polymerization reactor, 75 parts by weight of the rubbery polymer latex thus prepared based on the solid content was added on the basis of total 100 parts by weight of the rubbery polymer latex (based on the solid content), methyl methacrylate, n-butyl acrylate and styrene, and 200 parts by weight of ion exchange water, 0.2 parts by weight of potassium oleate, 0.036 parts by weight of ferrous sulfide, 0.2 parts by weight of sodium ethylenediaminetetraacetate, 0.2 parts by weight of sodium formaldehyde sulfoxylate, and 0.25 parts by weight of t-butyl hydroperoxide were added thereto in batch. Then, polymerization was performed at a reaction temperature of 60°C for 4 hours, while continuously adding 18 parts by weight of methyl methacrylate, 5 parts by weight of n-butyl acrylate and 2 parts by weight of styrene for 3 hours to prepare a graft copolymer latex.

### <Preparation of Graft Copolymer Powder>

The graft copolymer latex thus prepared was diluted in distilled water to be 15 wt% based on the solid content, and put in an agglomeration bath, and then, the internal temperature of the agglomeration bath was raised to 45°C. After that, to 100 parts by weight of the graft copolymer based on the solid content, IR1076 was added as an antioxidant, stirring was performed while adding an aqueous solution of sulfuric acid to agglomerate, and a graft copolymer and water were separated, followed by dehydrating and drying to prepare a graft copolymer powder.

### <Preparation of Epoxy Resin Composition in which Graft Copolymer is Dispersed>

To a planetary mixer (KM Tech, KPLM-0.6) set to 70°C, 55 parts by weight of an epoxy resin and 45 parts by weight of the graft copolymer powder thus prepared were added on the basis of total 100 parts by weight of the epoxy resin and the graft copolymer, and stirred in 10 rpm for 1 hour, 80 rpm for 2 hours, and 60 rpm for 10 hours to disperse the graft copolymer powder in an epoxy resin to prepare an epoxy resin composition in which the graft copolymer was dispersed.

In this case, the epoxy resin used after mixing 65 wt% of an isosorbide-based epoxy resin (Kukdo Chemical Co., KDBM-1040; E.E.W = 165 g/eq-185 g/eq; 25°C viscosity = 3,000 cPs-6,000 cPs) and 35 wt% of a bisphenol A-based epoxy resin (Kukdo Chemical Co., YD-128; E.E.W = 184 g/eq-190 g/eq; 25°C viscosity = 11,500 cPs-13,500 cPs).

### <Preparation of Structural Adhesive Composition>

30 parts by weight of an isosorbide-based epoxy resin (Kukdo Chemical Co., KDBM-1040; E.E.W = 165 g/eq-185 g/eq; 25°C viscosity = 3,000 cPs-6,000 cPs) and 25.4 parts by weight of a bisphenol A-based epoxy resin (Kukdo Chemical Co., YD-128; E.E.W = 184 g/eq-190 g/eq; 25°C viscosity = 11,500 cPs-13,500 cPs), as main materials, 15 parts by weight of the epoxy resin composition prepared above as a toughening agent, 20 parts by weight of a urethane resin (Adeka Co., QR-9466), 4.9 parts by weight of a curing agent (Evonik Co., Dicyanex 1400 F), 0.7 parts by weight of a curing accelerator (Evonik Co., Amicure UR7/10), 3.0 parts by weight of calcium oxide (Youyeong Materials Co., UNI-OX) and 1.0 part by weight of fumed silica (Carbot Co., CAB-O-SIL TS-720) were mixed using a paste mixer (KM Tech Co., PDM-300) at 600 rpm revolution and 500 rpm rotation for 3 minutes, and defoamed at 600 rpm revolution and 200 rpm rotation for 5 minutes to prepare an adhesive composition. In this case, the curing agent was added depending on the equivalent of the epoxy resin, and the curing accelerator was added at an equivalent ratio of 1/7 of the curing agent.

### Example 2

A graft copolymer latex was prepared by performing the same manner as in Example 1 except for adding 70 parts by weight instead of 75 parts by weight of a rubbery polymer latex based on the solid content, 21 parts by weight instead of 18 parts by weight of methyl methacrylate, 6 parts by weight instead of 5 parts by weight of n-butyl acrylate, and 3 parts by weight instead of 2 parts by weight of styrene during preparing the graft copolymer latex in Example 1, and a graft copolymer powder was prepared.

In addition, an epoxy resin composition was prepared by the same manner as in Example 1 except for using the graft copolymer powder thus prepared as a graft copolymer powder, and using by mixing 70 wt% instead of 65 wt% of an isosorbide-based epoxy resin (Kukdo Chemical Co., KDBM-1040) and 30 wt% instead of 35 wt% of a bisphenol A-based epoxy resin (Kukdo Chemical Co., YD-128) as an epoxy resin during preparing the epoxy resin composition in Example 1, and an adhesive composition was prepared.

### Example 3

An epoxy resin composition was prepared by the same manner as in Example 1 except for using by mixing 70 wt% instead of 65 wt% of an isosorbide-based epoxy resin (Kukdo Chemical Co., KDBM-1040) and 30 wt% instead of 35 wt% of a bisphenol A-based epoxy resin (Kukdo Chemical Co., YD-128) as an epoxy resin during preparing the epoxy resin composition in Example 1.

In addition, an adhesive composition was prepared by the same manner as in Example 1 except for using by mixing 40 parts by weight instead of 30 parts by weight of an isosorbide-based epoxy resin (Kukdo Chemical Co., KDBM-1040) and 15.4 parts by weight instead of 25.4 parts by weight of a bisphenol A-based epoxy resin (Kukdo Chemical Co., YD-128) as a main material, and adding the same amount of the epoxy resin composition as a toughening agent during preparing the structural adhesive composition in Example 1.

### Example 4

An epoxy resin composition was prepared by performing the same manner as in Example 1 except for using by mixing 70 wt% instead of 65 wt% of an isosorbide-based epoxy resin (Kukdo Chemical Co., KDBM-1040) and 30 wt% instead of 35 wt% of a bisphenol A-based epoxy resin (Kukdo Chemical Co., YD-128) as an epoxy resin during preparing the epoxy resin composition in Example 1, and an adhesive composition was prepared.

### Example 5

An epoxy resin composition was prepared by performing the same manner as in Example 1 except for using by mixing 80 wt% instead of 65 wt% of an isosorbide-based epoxy resin (Kukdo Chemical Co., KDBM-1040) and 20 wt% instead of 35 wt% of a bisphenol A-based epoxy resin (Kukdo Chemical Co., YD-128) as an epoxy resin during preparing the epoxy resin composition in Example 1.

In addition, an adhesive composition was prepared by the same manner as in Example 1 except for using by mixing 20 parts by weight instead of 30 parts by weight of an isosorbide-based epoxy resin (Kukdo Chemical Co., KDBM-1040) and 35.4 parts by weight instead of 25.4 parts by weight of a bisphenol A-based epoxy resin (Kukdo Chemical Co., YD-128) as a main material, and adding the same amount of the epoxy resin composition prepared as a toughening agent during preparing the structural adhesive composition in Example 1.

### Example 6

An epoxy resin composition was prepared by performing the same manner as in Example 1 except for using by mixing 70 wt% instead of 65 wt% of an isosorbide-based epoxy resin (Kukdo Chemical Co., KDBM-1040) and 30 wt% instead of 35 wt% of a bisphenol A-based epoxy resin (Kukdo Chemical Co., YD-128) as an epoxy resin, adding 50 parts by weight instead of 55 parts by weight of the epoxy resin, and adding 50 parts by weight instead of 45 parts by weight of the prepared graft copolymer powder during preparing the epoxy resin composition in Example 1.

In addition, an adhesive composition was prepared by the same manner as in Example 1 except for adding 30.4 parts by weight instead of 25.4 parts by weight of a bisphenol A-based epoxy resin (Kukdo Chemical Co., YD-128) as a main material, and adding 10 parts by weight of the prepared epoxy resin composition as a toughening agent during preparing the structural adhesive composition in Example 1.

### Example 7

A rubbery polymer latex was prepared by performing the same manner as in Example 1 except for adding 50 parts by weight instead of 75 parts by weight of ion exchange water, and 1.8 parts by weight instead of 0.9 parts by weight of potassium carbonate (K₂CO₃) during preparing the rubbery polymer latex in Example 1, and a graft copolymer latex and a graft copolymer powder were prepared.

In addition, an epoxy resin composition was prepared by performing the same manner as in Example 1 except for using the graft copolymer powder thus prepared as a graft copolymer powder, and using by mixing 70 wt% instead of 65 wt% of an isosorbide-based epoxy resin (Kukdo Chemical Co., KDBM-1040) and 30 wt% instead of 35 wt% of a bisphenol A-based epoxy resin (Kukdo Chemical Co., YD-128) as an epoxy resin during preparing the epoxy resin composition in Example 1, and an adhesive composition was prepared.

### Example 8

A graft copolymer latex was prepared by performing the same manner as in Example 1 except for adding 80 parts by weight instead of 75 parts by weight of a rubbery polymer latex based on the solid content, 14 parts by weight instead of 18 parts by weight of methyl methacrylate, and 4 parts by weight instead of 5 parts by weight of n-butyl acrylate during preparing the graft copolymer latex in Example 1, and a graft copolymer powder was prepared.

An epoxy resin composition was prepared by the same manner as in Example 1 except for using the graft copolymer powder thus prepared as a graft copolymer powder, and using by mixing 70 wt% instead of 65 wt% of an isosorbide-based epoxy resin (Kukdo Chemical Co., KDBM-1040) and 30 wt% instead of 35 wt% of a bisphenol A-based epoxy resin (Kukdo Chemical Co., YD-128) as an epoxy resin during preparing the epoxy resin composition in Example 1, and an adhesive composition was prepared.

### Example 9

A graft copolymer latex was prepared by performing the same manner as in Example 1 except for adding 85 parts by weight instead of 75 parts by weight of a rubbery polymer latex based on the solid content, 10.5 parts by weight instead of 18 parts by weight of methyl methacrylate, 3 parts by weight instead of 5 parts by weight of n-butyl acrylate, and 1.5 parts by weight instead of 2 parts by weight of styrene during preparing the graft copolymer latex in Example 1, and a graft copolymer powder was prepared.

An epoxy resin composition was prepared by the same manner as in Example 1 except for using the graft copolymer powder thus prepared as a graft copolymer powder, and using by mixing 70 wt% instead of 65 wt% of an isosorbide-based epoxy resin (Kukdo Chemical Co., KDBM-1040) and 30 wt% instead of 35 wt% of a bisphenol A-based epoxy resin (Kukdo Chemical Co., YD-128) as an epoxy resin during preparing the epoxy resin composition in Example 1, and an adhesive composition was prepared.

### Example 10

A graft copolymer latex was prepared by performing the same manner as in Example 1 except for adding 90 parts by weight instead of 75 parts by weight of the prepared rubbery polymer latex based on the solid content, 7 parts by weight instead of 18 parts by weight of methyl methacrylate, 2 parts by weight instead of 5 parts by weight of n-butyl acrylate, and 1 part by weight instead of 2 parts by weight of styrene during preparing the graft copolymer latex in Example 1, and a graft copolymer powder was prepared.

In addition, an epoxy resin composition was prepared by performing the same manner as in Example 1 except for using the graft copolymer powder thus prepared as a graft copolymer powder, and using by mixing 70 wt% instead of 65 wt% of an isosorbide-based epoxy resin (Kukdo Chemical Co., KDBM-1040) and 30 wt% instead of 35 wt% of a bisphenol A-based epoxy resin (Kukdo Chemical Co., YD-128) as an epoxy resin during preparing the epoxy resin composition in Example 1, and an adhesive composition was prepared.

### Example 11

A graft copolymer latex was prepared by performing the same manner as in Example 1 except for adding 0.1 parts by weight instead of 0.2 parts by weight of potassium oleate, and 0.125 parts by weight instead of 0.25 parts by weight of t-butyl hydroperoxide during preparing the graft copolymer latex in Example 1, and a graft copolymer powder was prepared.

In addition, an epoxy resin composition was prepared by performing the same manner as in Example 1 except for using the graft copolymer powder thus prepared as a graft copolymer powder, and using by mixing 70 wt% instead of 65 wt% of an isosorbide-based epoxy resin (Kukdo Chemical Co., KDBM-1040) and 30 wt% instead of 35 wt% of a bisphenol A-based epoxy resin (Kukdo Chemical Co., YD-128) as an epoxy resin during preparing the epoxy resin composition in Example 1, and an adhesive composition was prepared.

### Example 12

An adhesive composition was prepared by performing the same manner as in Example 1 except for adding 25 parts by weight instead of 30 parts by weight of an isosorbide-based epoxy resin (Kukdo Chemical Co., KDBM-1040) and 15.4 parts by weight instead of 25.4 parts by weight of a bisphenol A-based epoxy resin (Kukdo Chemical Co., YD-128) as a main material, and adding 30 parts by weight of the prepared epoxy resin composition as a toughening agent during preparing the structural adhesive composition in Example 1.

### Comparative Example 1

An epoxy resin composition was prepared by performing the same manner as in Example 1 except for using by mixing 85 wt% instead of 65 wt% of an isosorbide-based epoxy resin (Kukdo Chemical Co., KDBM-1040) and 15 wt% instead of 35 wt% of a bisphenol A-based epoxy resin (Kukdo Chemical Co., YD-128) as an epoxy resin during preparing the epoxy resin composition in Example 1, and an adhesive composition was prepared.

### Comparative Example 2

A graft copolymer latex was prepared by performing the same manner as in Example 1 except for adding 65 parts by weight instead of 75 parts by weight of a rubbery polymer latex based on the solid content, 22 parts by weight instead of 18 parts by weight of methyl methacrylate, 10 parts by weight instead of 5 parts by weight of n-butyl acrylate, and 3 parts by weight instead of 2 parts by weight of styrene during preparing the graft copolymer latex in Example 1, and a graft copolymer powder was prepared.

In addition, an epoxy resin composition was prepared by the same manner as in Example 1 except for using the graft copolymer powder thus prepared as a graft copolymer powder, and using by mixing 70 wt% instead of 65 wt% of an isosorbide-based epoxy resin (Kukdo Chemical Co., KDBM-1040) and 30 wt% instead of 35 wt% of a bisphenol A-based epoxy resin (Kukdo Chemical Co., YD-128) as an epoxy resin during preparing the epoxy resin composition in Example 1, and an adhesive composition was prepared.

### Comparative Example 3

A graft copolymer latex was prepared by performing the same manner as in Example 1 except for adding 68 parts by weight instead of 75 parts by weight of a rubbery polymer latex based on the solid content, 21 parts by weight instead of 18 parts by weight of methyl methacrylate, and 9 parts by weight instead of 5 parts by weight of n-butyl acrylate during preparing the graft copolymer latex in Example 1, and a graft copolymer powder was prepared.

In addition, an epoxy resin composition was prepared by performing the same manner as in Example 1 except for using the graft copolymer powder thus prepared as a graft copolymer powder, and using by mixing 70 wt% instead of 65 wt% of an isosorbide-based epoxy resin (Kukdo Chemical Co., KDBM-1040) and 30 wt% instead of 35 wt% of a bisphenol A-based epoxy resin (Kukdo Chemical Co., YD-128) as an epoxy resin during preparing the epoxy resin composition in Example 1, and an adhesive composition was prepared.

### Comparative Example 4

A graft copolymer latex was prepared by performing the same manner as in Example 1 except for adding 95 parts by weight instead of 75 parts by weight of a rubbery polymer latex based on the solid content, 3.5 parts by weight instead of 18 parts by weight of methyl methacrylate, 1 part by weight instead of 5 parts by weight of n-butyl acrylate, and 0.5 parts by weight instead of 2 parts by weight of styrene during preparing the graft copolymer latex in Example 1, and a graft copolymer powder was prepared.

In addition, an epoxy resin composition was prepared by performing the same manner as in Example 1 except for using the graft copolymer powder thus prepared as a graft copolymer powder, and using by mixing 70 wt% instead of 65 wt% of an isosorbide-based epoxy resin (Kukdo Chemical Co., KDBM-1040) and 30 wt% instead of 35 wt% of a bisphenol A-based epoxy resin (Kukdo Chemical Co., YD-128) as an epoxy resin during preparing the epoxy resin composition in Example 1, and an adhesive composition was prepared.

### Comparative Example 5

An epoxy resin composition was prepared by performing the same manner as in Example 1 except for using by mixing 50 wt% instead of 65 wt% of an isosorbide-based epoxy resin (Kukdo Chemical Co., KDBM-1040) and 50 wt% instead of 35 wt% of a bisphenol A-based epoxy resin (Kukdo Chemical Co., YD-128) as an epoxy resin during preparing the epoxy resin composition in Example 1, and an adhesive composition was prepared.

### Experimental Example 1

For the rubbery polymers and graft copolymers prepared in Examples 1 to 12 and Comparative Examples 1 to 5, the average particle diameters of cores and graft copolymers and the weight average molecular weights of shells were measured and shown in Tables 1 to 3 below together with the content of each component.
* Average particle diameters of cores and graft copolymers (nm): Each of the rubbery polymer latexes and the graft copolymer latexes prepared in Examples 1 to 8 and Comparative Examples 1 to 7 was diluted in distilled water to a concentration of 200 ppm, and measurement was conducted by a dynamic light scattering (DLS) method according to ISO 22412 using NICOMP 380.
* Average molecular weight of shell (g/mol): The weight average molecular weights of the shells in the graft copolymers with a core-shell type were measured by gel permeation chromatography (GPC, PL GPC220, Agilent Technologies) under the conditions below.

In this case, a portion of the graft copolymer solution dispersed in tetrahydrofuran was taken, and a precipitate was separated by centrifuging. The supernatant was taken and filtered through a 0.45 µm PTFE syringe filter and used as a sample solution. The graft copolymer standard was 30.0 mg/mL, and a linear polymer was sampled at a concentration of 1.5 mg/mL.
- Column: PL MiniMixed B x 2
- Solvent: Tetrahydrofuran (stabilized with BHT)
- Flow rate: 1.0 ml/min
- Sample concentration: 1.0 mg/ml
- Injection amount: 100 µl
- Column temperature: 30°C
- Detector: Waters 2414 Refractive Index Detector
- Data processing: Empower 3

**[Table 1]**

| Division | | | Example | | | | | |
|---|---|---|---|---|---|---|---|---|
| | | | 1 | 2 | 3 | 4 | 5 | 6 |
| Core | Rubbery polymer | (parts by weight) | 75 | 70 | 75 | 75 | 75 | 75 |
| | Average particle diameter | (nm) | 300 | 300 | 300 | 300 | 300 | 300 |
| Shell | Methyl methacry late | (parts by weight) | 18 | 21 | 18 | 18 | 18 | 18 |
| | n-Butyl acrylate | (parts by weight) | 5 | 6 | 5 | 5 | 5 | 5 |
| | Styrene | (parts by weight) | 2 | 3 | 2 | 2 | 2 | 2 |
| | Weight average molecula r weight | (g/mol) | 40,0 00 | 40,0 00 | 40,0 00 | 40,0 00 | 40,0 00 | 40,0 00 |
| Graft copol ymer | Average particle diameter | (nm) | 325 | 325 | 325 | 325 | 325 | 325 |

**[Table 2]**

| Division | | | Example | | | | | |
|---|---|---|---|---|---|---|---|---|
| | | | 7 | 8 | 9 | 10 | 11 | 12 |
| Core | Rubbery polymer | (parts by weight) | 75 | 80 | 85 | 90 | 75 | 75 |
| | Average particle diameter | (nm) | 480 | 300 | 300 | 300 | 300 | 300 |
| Shell | Methyl methacryl ate | (parts by weight) | 18 | 14 | 10.5 | 7 | 18 | 18 |
| | n-Butyl acrylate | (parts by weight) | 5 | 4 | 3 | 2 | 5 | 5 |
| | Styrene | (parts by weight) | 2 | 2 | 1.5 | 1 | 2 | 2 |
| | Weight average molecular weight | (g/mol) | 40,0 00 | 40,0 00 | 40,0 00 | 40,0 00 | 80,0 00 | 40, 000 |
| Graft copol ymer | Average particle diameter | (nm) | 500 | 325 | 325 | 325 | 325 | 325 |

**[Table 3]**

| Division | | | Comparative Example | | | | |
|---|---|---|---|---|---|---|---|
| | | | 1 | 2 | 3 | 4 | 5 |
| Core | Rubbery polymer | (parts by weight) | 75 | 65 | 68 | 95 | 75 |
| | Average particle diameter | (nm) | 300 | 300 | 300 | 300 | 300 |
| Shell | Methyl methacryl ate | (parts by weight) | 18 | 22 | 21 | 3.5 | 18 |
| | n-Butyl acrylate | (parts by | 5 | 10 | 9 | 1 | 5 |
| | | weight) | | | | | |
| | Styrene | (parts by weight) | 2 | 3 | 2 | 0.5 | 2 |
| | Weight average molecular weight | (g/mol) | 40,00 0 | 40,00 0 | 40,00 0 | 40,00 0 | 40,00 0 |
| Graft copol ymer | Average particle diameter | (nm) | 325 | 325 | 325 | 325 | 325 |

### Experimental Example 2

For the epoxy resin compositions in which the graft copolymers which are the curable resin compositions prepared in Examples 1 to 12 and Comparative Examples 1 to 5 are dispersed, the dispersion states of the graft copolymers were confirmed by the method below, and the viscosity was measured. For some examples and comparative examples, the peak area ratio for each of the bio curable resin and the epoxy resin, measured using an evaporation light scattering detector of high performance liquid chromatography was calculated, and shown together with the content of each component in Tables 4 to 6 below.
* Dispersion state: The epoxy resin composition was applied to a cold rolled (CR) steel sheet with a size of 25 mm x 100 mm to a thickness of 0.2 mm, and the number of particles observed with the naked eye was confirmed. In this case, if the number of particles observed with the naked eye is less than 10, the dispersion state represents excellent, if 10 to less than 50, the dispersion state represents common, and if 50 or more, the dispersion state represents poor.
* 25°C viscosity (Pa.S): For the epoxy resin composition prepared above, the 25°C viscosity was measured using a Rheometer (Anton paar Co., MRC 302), and the viscosity value at a shear rate of 2.4 s⁻¹ and 100 s was shown.
* Peak area ratio: 0.2 g of the epoxy resin composition sample prepared above was dissolved in acetone, and 40 mL of methanol was added thereto. The supernatant was filtered through a 2 mL vial for liquid chromatography using a 0.22 µm polytetrafluoroethylene (PTFE) filter, and the peak area of each of the bio curable resin and the epoxy resin was detected according to an elution time by a evaporation light scattering detector (ELSD) using high performance liquid chromatography (HPLC). Then, the peak area ratio for the bio curable resin and the epoxy resin (bio curable resin: epoxy resin) was calculated.

**[Table 4]**

| Division | | Example | | | | | |
|---|---|---|---|---|---|---|---|
| | | 1 | 2 | 3 | 4 | 5 | 6 |
| Epoxy resin | ISBE¹⁾ : BPA²⁾ weight ratio | 65:35 | 70:30 | 70:30 | 70:30 | 80:20 | 70:30 |
| | (parts by weight) | 55 | 55 | 55 | 55 | 55 | 50 |
| Graft copolymer | (parts by | 45 | 45 | 45 | 45 | 45 | 50 |
| powder | weight) | | | | | | |
| Dispersion state | | 1 | 1 | 2 | 2 | 2 | 3 |
| 25°C viscosity | (Pa.s) | 1,200 | 1,380 | 1,300 | 1,300 | 1,700 | 1,750 |
| HPLC/ELSD area | ISBE¹⁾ | 762 | Immea surab le | 1,290 | 1,290 | 1,572 | 1,052 |
| | BPA²⁾ | 704 | Immea surab le | 465 | 465 | 365 | 567 |
| Area ratio | ISBE¹⁾ : BPA²⁾ peak area ratio | 1.08 : 1 | - | 2.77: 1 | 2.77: 1 | 4.31: 1 | 1.86: 1 |
| 1) ISBE: isosorbide-based epoxy resin | | | | | | | |
| 2) BPA: bisphenol A-based epoxy resin | | | | | | | |

**[Table 5]**

| Division | | Example | | | | | |
|---|---|---|---|---|---|---|---|
| | | 7 | 8 | 9 | 10 | 11 | 12 |
| Epoxy resin | ISBE¹⁾ : BPA²⁾ weight ratio | 70:30 | 70:30 | 70:30 | 70:30 | 70:30 | 70:30 |
| | (parts by weight) | 55 | 55 | 55 | 55 | 55 | 55 |
| Graft copolymer powder | (parts by weight) | 45 | 45 | 45 | 45 | 45 | 45 |
| Dispersion state | | 2 | 3 | 4 | 4 | 5 | 2 |
| 25°C viscosity | (Pa.s) | 1,350 | 1,360 | 1,380 | 1,400 | 1,900 | 1,300 |
| HPLC/ELSD area | ISBE¹⁾ | 1,345 | Immea surab le | Immea surab le | 1,525 | 1,425 | 1,399 |
| | BPA²⁾ | 445 | Immea surab le | Immea surab le | 553 | 498 | 421 |
| Area ratio | ISBE¹⁾ : BPA²⁾ peak area ratio | 3.02: 1 | - | - | 2.76 : 1 | 2.86: 1 | 3.12: 1 |
| 1) ISBE: isosorbide-based epoxy resin | | | | | | | |
| 2) BPA: bisphenol A-based epoxy resin | | | | | | | |

**[Table 6]**

| Division | | Comparative Example | | | | |
|---|---|---|---|---|---|---|
| | | 1 | 2 | 3 | 4 | 5 |
| Epoxy resin | ISBE¹⁾ : BPA²⁾ weight ratio | 85:15 | 70:30 | 70:30 | 70:30 | 50:50 |
| | (parts by weight) | 55 | 55 | 55 | 55 | 55 |
| Graft copolyme r powder | (parts by weight) | 45 | 45 | 45 | 45 | 45 |
| Dispersion state | | 35 | 2 | 2 | 5 | 30 |
| 25°C viscosit y | (Pa.s) | 7,000 | 1,350 | 1,365 | 2,000 | 5,900 |
| HPLC/ELS D area | ISBE¹⁾ | 1, 980 | Immeas urable | Immeas urable | Immeas urable | 509 |
| | BPA²⁾ | 281 | Immeas urable | Immeas urable | Immeas urable | 2, 450 |
| Area ratio | ISBE¹⁾ : BPA²⁾ peak area ratio | 7.04:1 | - | - | - | 0.21:1 |
| 1) ISBE: isosorbide-based epoxy resin | | | | | | |
| 2) BPA: bisphenol A-based epoxy resin | | | | | | |

As shown in Tables 4 and 5, all the curable resin compositions of Examples 1 to 12, prepared according to the present invention showed excellent dispersion states and the degree of the 25°C viscosity of 1,200 Pa.s to 1,900 Pa.s, and it could be confirmed that the dispersion state was excellent though being dispersed in powder phases.

On the contrary, as shown in Table 6, the curable resin composition prepared in Comparative Example 1 was prepared in a non-flowable gel state rather than a flowable liquid of a dispersion, so it could be confirmed that the graft copolymer was not dispersed in a powder phase.

In addition, it could be confirmed that the dispersibility of the curable resin composition prepared in Comparative Example 5 decreased as the content of the epoxy resin increased to the same content as the bio curable resin.

### Experimental Example 3

For the structural adhesive compositions prepared in Examples 1 to 12 and Comparative Examples 1 to 5, shear strength and impact peel strength were measured by the methods below and shown together with the content of each component in Tables 7 to 9 below.
* Shear strength (Lap Shear, MPa): The shear strength of the prepared structural adhesive composition was measured according to ASTM D1002 standard. The size of the test piece was 180 mm x 25.4 mm x 1.6 T (mm), and the size of one side where the adhesive composition was applied was 25.4 mm x 12.5 mm. After removing contaminants from the one side of the test piece using ethanol, the prepared structural adhesive composition was applied. The thickness of the adhesive composition was kept constant using microbeads, another specimen was covered and fixed on the top, and then curing was performed at 180°C for 30 minutes. After curing, the shear strength was measured by applying a load at a rate of 1.3 mm/min using a UTM tester (Instron Co., 5900).
* Impact peel strength (N/mm): The impact peel strength for the structural adhesive composition prepared above was measured according to ISO 11343 standard. The size of the test piece was 90 mm x 20 mm x 1.6 T (mm), and the size of one side where the adhesive composition was applied was 30 mm x 20 mm. After removing contaminants from the one side of the test piece using ethanol, the prepared structural adhesive composition was applied. The thickness of the adhesive composition was kept constant using microbeads, another specimen was covered and fixed on the top, and then curing was performed at 180°C for 30 minutes. After curing, stabilization was performed at 25°C and -40°C for 1 hour or more each, the impact peel strength according to the shear strength was measured by applying a load at a rate of 2 mm/sec using an impact strength tester (Instron Co., 9350).

**[Table 7]**

| Division | | | Example | | | | | |
|---|---|---|---|---|---|---|---|---|
| | | | 1 | 2 | 3 | 4 | 5 | 6 |
| Struct ural adhesi ve compos ition | Main material 1 (ISBE¹⁾ ) | (parts by weight) | 30 | 30 | 40 | 30 | 20 | 30 |
| | Main material 2 (BPA²⁾ ) | (parts by weight) | 25. 4 | 25. 4 | 15. 4 | 25. 4 | 35. 4 | 30. 4 |
| | Toughening agent | (parts by weight) | 15 | 15 | 15 | 15 | 15 | 10 |
| | Urethane resin | (parts by weight) | 20 | 20 | 20 | 20 | 20 | 20 |
| | Curing agent | (parts by weight) | 4.9 | 4.9 | 4.9 | 4.9 | 4.9 | 4.9 |
| | Curing accelerator | (parts by weight) | 0.7 | 0.7 | 0.7 | 0.7 | 0.7 | 0.7 |
| | Calcium oxide | (parts by weight) | 3.0 | 3.0 | 3.0 | 3.0 | 3.0 | 3.0 |
| | Fumed silica | (parts by weight) | 1.0 | 1.0 | 1.0 | 1.0 | 1.0 | 1.0 |
| | Total | (parts by weight) | 100 | 100 | 100 | 100 | 100 | 100 |
| Shear strength | | (MPa) | 38. 1 | 37. 5 | 37. 0 | 38. 4 | 38. 0 | 38. 2 |
| Impact peel streng th | 25°C | (N/m) | 33. 4 | 31. 5 | 32. 0 | 32. 5 | 33. 0 | 33. 4 |
| | -40°C | (N/m) | 29. 1 | 28. 2 | 28. 0 | 29. 5 | 28. 5 | 29. 5 |
| 1) ISBE: isosorbide-based epoxy resin | | | | | | | | |
| 2) BPA: bisphenol A-based epoxy resin | | | | | | | | |

**[Table 8]**

| Division | | | Example | | | | | |
|---|---|---|---|---|---|---|---|---|
| | | | 7 | 8 | 9 | 10 | 11 | 12 |
| Struct ural adhesi ve compos ition | Main material 1 (ISBE¹⁾ ) | (parts by weight) | 30 | 30 | 30 | 30 | 30 | 25 |
| | Main material 2 (BPA²⁾) | (parts by weight) | 25. 4 | 25. 4 | 25. 4 | 25. 4 | 25. 4 | 15. 4 |
| | Toughening agent | (parts by weight) | 15 | 15 | 15 | 15 | 15 | 30 |
| | Urethane resin | (parts by weight) | 20 | 20 | 20 | 20 | 20 | 20 |
| | Curing agent | (parts by weight) | 4.9 | 4.9 | 4.9 | 4.9 | 4.9 | 4.9 |
| | Curing accelerator | (parts by weight) | 0.7 | 0.7 | 0.7 | 0.7 | 0.7 | 0.7 |
| | Calcium oxide | (parts by weight) | 3.0 | 3.0 | 3.0 | 3.0 | 3.0 | 3.0 |
| | Fumed silica | (parts by weight) | 1.0 | 1.0 | 1.0 | 1.0 | 1.0 | 1.0 |
| | Total | (parts by weight) | 100 | 100 | 100 | 100 | 100 | 100 |
| Shear strength | | (MPa) | 38. 7 | 38. 7 | 38. 6 | 38. 8 | 38. 6 | 37. 4 |
| Impact peel streng th | 25°C | (N/m) | 33. 6 | 33. 8 | 33. 9 | 34. 0 | 33. 9 | 34. 5 |
| | -40°C | (N/m) | 29. 7 | 29. 6 | 29. 7 | 29. 8 | 29. 4 | 29. 9 |
| 1) ISBE: isosorbide-based epoxy resin | | | | | | | | |
| 2) BPA: bisphenol A-based epoxy resin | | | | | | | | |

**[Table 9]**

| Division | | | Comparative Example | | | | |
|---|---|---|---|---|---|---|---|
| | | | 1 | 2 | 3 | 4 | 5 |
| Struct ural adhesi ve compos ition | Main material 1 (ISBE¹⁾ ) | (parts by weight) | 30 | 30 | 30 | 30 | 30 |
| | Main material 2 (BPA²⁾ ) | (parts by weight) | 25.4 | 25.4 | 25.4 | 25.4 | 25.4 |
| | Toughening agent | (parts by weight) | 15 | 15 | 15 | 15 | 15 |
| | Urethane resin | (parts by weight) | 20 | 20 | 20 | 20 | 20 |
| | Curing agent | (parts by weight) | 4.9 | 4.9 | 4.9 | 4.9 | 4.9 |
| | Curing accelerator | (parts by weight) | 0.7 | 0.7 | 0.7 | 0.7 | 0.7 |
| | Calcium oxide | (parts by weight) | 3.0 | 3.0 | 3.0 | 3.0 | 3.0 |
| | Fumed silica | (parts by weight) | 1.0 | 1.0 | 1.0 | 1.0 | 1.0 |
| | Total | (parts by weight) | 100 | 100 | 100 | 100 | 100 |
| Shear strength | | (MPa) | 30.5 | 37.0 | 37.1 | 30.0 | 28.9 |
| Impact | 25°C | (N/m) | 27.8 | 29.0 | 29.2 | 25.0 | 27.0 |
| peel streng th | -40°C | (N/m) | 24.0 | 24.1 | 24.5 | 20.0 | 24.1 |
| 1) ISBE: isosorbide-based epoxy resin | | | | | | | |
| 2) BPA: bisphenol A-based epoxy resin | | | | | | | |

As shown in Tables 7 and 8, it could be confirmed that all the structural adhesive compositions of Examples 1 to 8, including the curable resin composition prepared according to the present invention as a toughening agent and the bio curable resin as a main material, showed excellent shear strength and impact peel strength.

On the contrary, as shown in Table 9, it could be confirmed that in the structural adhesive composition prepared using the curable resin composition of Comparative Example 1, in which an excessive amount of the bio curable resin in the curable resin was used during preparing the curable resin composition, the graft copolymer was not dispersed in the curable resin composition, and both the shear strength and the impact peel strength were degraded.

In addition, in the cases of Comparative Examples 2 and 3, in which the core contents of the graft copolymers in dispersion phases were small, it could be confirmed that the preparation of the curable resin compositions and structural adhesive compositions were advantageous, but the contents of the cores for absorbing impact were insufficient, and the impact peel strength was degraded.

In addition, in the case of Comparative Example 4, in which the core content of the graft copolymer in a dispersion phase was very large, it could be confirmed that viscosity tended to increase during preparing the curable resin composition, and the dispersibility of the graft copolymer in the curable resin composition was degraded due to the decrease of the shell content, thereby degrading both the shear strength and impact peel strength.

In addition, in the structural adhesive composition prepared using the curable resin composition of Comparative Example 5 using the same amounts of the bio curable resin and the epoxy resin in the curable resin during preparing the curable resin composition, it could be confirmed that the graft copolymer was not dispersed in the curable resin composition, and both shear strength and impact peel strength were degraded.

From the results, it could be confirmed that the curable resin composition of the present invention reduces environmental pollution by using an eco-friendly bio-based resin instead of the conventional petroleum-based epoxy resin, while satisfying all mechanical strength characteristics required by a curable resin composition containing the conventional petroleum-based epoxy resin, and the graft copolymer was dispersed in the curable resin through a powder phase dispersion method, resulting in excellent productivity and excellent mechanical properties.

In addition, the adhesive composition of the present invention is a structural adhesive composition, and by applying the curable resin composition as a toughening agent, mechanical strength is excellent while containing an eco-friendly bio-based epoxy resin as the main material.

## Claims

1. A curable resin composition comprising a continuous phase containing a curable resin and a dispersion phase containing a graft copolymer,
wherein the curable resin comprises 58 wt% to 82 wt% of a bio curable resin, and 18 wt% to 42 wt% of an epoxy resin,
the graft copolymer is a core-shell type graft copolymer comprising a core containing a rubbery polymer and a shell formed by graft polymerizing a graft monomer to the rubbery polymer, and
the graft copolymer comprises 70 wt% to 92 wt% of the rubbery polymer.

2. The curable resin composition according to claim 1, wherein the bio curable resin is a bio epoxy resin.

3. The curable resin composition according to claim 1, wherein the bio curable resin comprises an isosorbide unit.

4. The curable resin composition according to claim 1, wherein the bio curable resin is represented by the following Formula 1: 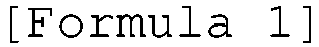 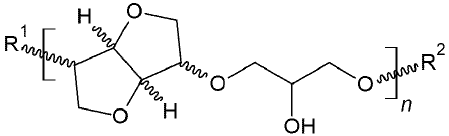 in Formula 1,
R¹ and R² are each independently hydrogen, a hydroxyl group, an epoxy group, or a glycidyl group, and
n is an integer selected from 1 to 1,000.

5. The curable resin composition according to claim 1, wherein the bio curable resin has an epoxy equivalent (E.E.W) of 150 g/eq to 190 g/eq.

6. The curable resin composition according to claim 1, wherein the bio curable resin has a 25°C viscosity of 500 cPs to 6,000 cPs.

7. The curable resin composition according to claim 1, wherein the epoxy resin comprises one or more selected from the group consisting of a bisphenol A-type epoxy resin, a bisphenol F-type epoxy resin, a bisphenol AD-type epoxy resin, a bisphenol E-type epoxy resin, a naphthalene-type epoxy resin, a biphenyl-type epoxy resin, a dicyclopentadiene-type epoxy resin, a phenol novolac-type epoxy resin, an aliphatic cyclic epoxy resin and a glycidyl amine-type epoxy resin.

8. The curable resin composition according to claim 1, wherein the epoxy resin has an epoxy equivalent (E.E.W) of 180 g/eq to 190 g/eq.

9. The curable resin composition according to claim 1, wherein the epoxy resin has a 25°C viscosity of 8,000 cPs to 13,500 cPs.

10. The curable resin composition according to claim 1, wherein a peak area ratio for the bio curable resin and the epoxy resin (bio curable resin: epoxy resin) is 0.60 to 5.60: 1, the peak area ratio being obtained by dissolving 0.2 g of the curable resin composition sample in acetone, adding 40 mL of methanol thereto, filtering a supernatant through a 2 mL vial for liquid chromatography using a polytetrafluoroethylene filter of 0.22 µm, and detecting in accordance with an elution time by an evaporation light scattering detector (ELSD) using high performance liquid chromatography (HPLC).

11. The curable resin composition according to claim 1, wherein the rubbery polymer comprises one or more monomer units selected from the group consisting of a conjugated diene-based monomer unit and an alkyl acrylate-based monomer unit.

12. The curable resin composition according to claim 1, wherein the graft copolymer comprises 70 wt% to 92 wt% of the core and 8 wt% to 30 wt% of the shell.

13. The curable resin composition according to claim 1, wherein the core has an average particle diameter of 100 nm to 500 nm.

14. The curable resin composition according to claim 1, wherein the graft monomer comprises an alkyl (meth)acrylate-based monomer.

15. The curable resin composition according to claim 1, wherein the graft monomer comprises a methyl (meth)acrylate monomer and an alkyl (meth)acrylate-based monomer of 2 to 12 carbon atoms.

16. The curable resin composition according to claim 1, wherein the graft monomer comprises an aromatic vinyl-based monomer.

17. The curable resin composition according to claim 1, wherein the shell has a weight average molecular weight of 10,000 g/mol to 85,000 g/mol.

18. The curable resin composition according to claim 1, wherein the graft copolymer has an average particle diameter of 100 nm to 600 nm.

19. The curable resin composition according to claim 1, wherein the curable resin composition comprises 50 wt% to 99 wt% of the continuous phase and 1 wt% to 50 wt% of the dispersion phase.

20. An adhesive composition comprising the curable resin composition according to any one of claim 1 to claim 19.
